# EUROPÄISCHE PATENTSCHRIFT

(11) **EP 0 662 462 B1**
(45) Veröffentlichungstag und Bekanntmachung des Hinweises auf die Patenterteilung: **12.05.1999**
(21) Anmeldenummer: 95100048.8
(22) Anmeldetag: 03.01.1995
(51) Int. Cl.: C04B 35/573, C04B 35/565, C04B 35/636

(54) **Verfahren zum Herstellen von keramischen Bauteilen aus Siliziumcarbid**
Method of making ceramic silicon carbide articles
Procédé de fabrication d'articles en carbure de silicium

(30) Priorität: 05.01.1994 DE 4400131
(43) Veröffentlichungstag der Anmeldung: 12.07.1995
(73) Patentinhaber: CeramTec AG Innovative Ceramic Engineering, 73207 Plochingen (DE)
(72) Erfinder: Benker, Werner, D-95100 Selb (DE)
(74) Vertreter: Schulz, Wilfried, Dipl.-Ing.

(56) Entgegenhaltungen:
- DE-C- 4 315 690
- DATABASE WPI Week 8931, Derwent Publications Ltd., London, GB; AN 89-223104 'Prodn. of preform for ceramics article' & JP-A-1 157 803 (KANEBO KK) 21. Juni 1989
- CHEMICAL ABSTRACTS, vol. 109, no. 10, 5. September 1988, Columbus, Ohio, US; abstract no. 78539, T. KATO ET AL. 'Sintered silicon carbide of high density and strength'

## Beschreibung

Die Erfindung betrifft ein Verfahren zur Herstellung von Bauteilen aus Siliziumcarbid unter Zusatz von Kohlenstoff und/oder kohlenstoffhaltigen Bindemitteln, wobei der Kohlenstoff mindestens teilweise durch Pyrolyse der Bindemittel im grünen Bauteil gewonnen wird.

Bauteile aus siliziumkarbidreichen Keramiken werden in verschiedensten Anwendungsgebieten eingesetzt, insbesondere als Verschleißteile wie Düsen und Auskleidungen oder als Maschinenbauteile wie Lager-, Gleit- und Dichtelemente sowie als Bauteile für die Wärmetechnik wie Brennerrohre und Wärmetauscher.

Aus der DE-C-32 31 100 ist bekannt, daß temporäre Bindemittel organischer Natur bei der Herstellung von keramischen Bauteilen aus Siliziumcarbid eingesetzt werden können, welche durch thermische Behandlung in Kohlenstoff überführt werden. Der Kohlenstoff verleiht den Bauteilen einerseits die für die mechanische Nachbearbeitung nach dem Verkoken notwendige Festigkeit, andererseits steht er für den anschließenden Sinter- oder Infiltrierungsprozeß als Reaktionspartner zur Verfügung. Insbesondere ist auf Phenolharze und ähnliche hingewiesen. Die meisten phenol- oder phenylhaltigen aromatischen Verbindungen, die einen Verkokungsrückstand von ≥ 30 % ergeben, haben aber nachteiligerweise die Eigenschaft, daß sie bei der thermischen Zersetzung unter Sauerstoffausschluß gesundheitsgefährdende Spaltprodukte wie Phenol, Formaldehyd, Kresol, Xylol und Benzol freisetzen, die im Betrieb zu beträchtlichen Problemen wegen ihrer komplizierten Entsorgung führen und darüber hinaus aufwendige Sicherheitsvorkehrungen erforderlich machen. Bei der Herstellung und Weiterverarbeitung von phenolharzhaltigen Massen sind entsprechende Sicherheitsmaßnahmen erforderlich.

Die organischen Bindemittel selbst bilden bei der Pyrolyse Kohlenstoffbrücken aus, die dem Baute eine zur mechanischen Bearbeitung genügende Festigkeit verleihen und werden beim Reaktionssinterprozeß mit Silizium zu sekundärem Siliziumkarbid umgesetzt. Bei der Herstellung von gesintertem Siliziumkarbid ist es allgemein bekannt, daß Kohlenstoff eingesetzt werden muß, um die Oberflächen der Siliziumcarbidpulver von anhaftenden SiO₂-Schichten zu befreien. Ohne Kohlenstoffzusatz würde der Sintervorgang verhindert bzw. stark behindert. Vergleichbar zur Herstellung von siliziuminfiltriertem SiC ist bekannt, als Kohlenstofflieferant aromatische carbonisierbare Bindemittel einzusetzen. Diese werden bevorzugt in einem Lösungsmittel vorgelöst, um eine möglichst gleichförmige Verteilung derselben auf den Pulverteilchen zu erreichen.

Bei der Herstellung von Kohle- oder Graphitkörpern werden ebenfalls aromatische Verbindungen eingesetzt, welche durch Pyrolyse in Kohlenstoff umgesetzt werden. Hierbei ist es teilweise üblich, ein Baute mehrmals mit gelösten aromatischen Verbindungen zu tränken und zu verkoken, um die Eigenschaften zu optimieren.

Ein weiterer Nachteil der bekannten organischen Zuschlagstoffe ist die für eine wirklich vollständige Pyrolse notwendige hohe Temperatur im Bereich von etwa 1000 bis 1200 °C.

JP-A-1157803 lehrt ein Verfahren zur Herstellung eines Precursor für ein keramisches Bauteil, bei dem Binder und feine anorganische Pulver, z.B. auch SiC, in einer Flüssigkeit gemischt werden und nach einem Knetprozeß in eine Form gegeben werden. Stärke wird hierbei als Klebemittel und Porenbildner eingesetzt.

Der vorliegenden Erfindung lag die Aufgabe zugrunde, ein neues Herstellungsverfahren für Bauteile aus Siliziumcarbid anzugeben, mit dem es möglich ist, bei niedrigen Temperaturen von ≤ 700 °C eine vollständige Verkokung zu erreichen, wobei bei der Verkokung keine schwer entsorgbaren Spaltprodukte freisetzt werden sollen und wobei im Rahmen der Masseaufbereitung möglichst in wässrigen Systemen gearbeitet werden kann.

Die Erfindung löst die Aufgabe durch ein Herstellungsverfahren der eingangs beschriebenen Art, dessen Kennzeichenmerkmale darin zu sehen sind, daß als Bindemittel eine wässerige Dispersion oder Lösung aus in kaltem oder in heißem Wasser vollständig dispergierte und/oder vollständig gelöste modifizierte Stärke mit einer Viskosität im Bereich von 100 bis 5.000 mPa·s verwendet wird und daß dieses Bindemittel bei Temperaturen ≤ 700 °C vollständig thermisch zersetzt wird. Eine wasserdispergierbare, wasserlösliche und/oder wassergelöste Stärke fällt häufig im Herstellungsprozeß der Stärke als Lösung an und wird vorzugsweise als Stärkelösung verwendet.

Zur erfindungsgemäßen Herstellung von siliciumcarbidreichen Keramiken eignen sich Stärkeprodukte fast jeglicher Art, die üblicherweise in Pulverform vorliegen. Um allerdings die Stärke für das erfindungsgemäße Herstellverfahren nutzbar zu machen, ist es notwendig, die Stärke entweder in kaltem oder in heißem Wasser vollständig dispergiert und/oder vollständig gelöst einzusetzen. Hierbei ist es nur in Ausnahmefällen möglich, Konzentrationen von 40 Gew.-% oder mehr Feststoff, bezogen auf das Gesamtgewicht der Mischung aus Feststoffen plus Wasser, herzustellen, ohne daß eine für den weiteren Herstellungsprozeß ungeeignet hohe Viskosität erhalten wird. Die Viskosität könnte zwar durch Zugabe von Wasser erniedrigt werden, was jedoch bei dem nachfolgenden Trocknungsprozeß der Masse oder der daraus hergestellten Bauteile durch erhöhten Energieeinsatz wieder entfernt werden müßte. Ein weiterer Nachteil beim Einsatz von Stärkeprodukten in Pulverform besteht darin, daß beim Lösen und/oder Quellen ungelöste bzw. gelartige Bestandteile zurückbleiben können, welche sich im gebrannten Bauteil in Form von Störstellen (z.B. Poren und zusilizierte Poren) zeigen und somit die mechanischen Werkstoffeigenschaften des Materials und die Homogenität des Gefüges negativ beeinflussen. Diese Poren entstehen durch Ausbrennen der ungelösten bzw. gelartigen Bestandteile und können beim Silizieren mit Silizium gefüllt werden.

In der Praxis hat es sich daher als besonders bevorzugt und vorteilhaft erwiesen, die Stärke als gekochte wäßrige Lösung mit bis zu 75 % Feststoffanteil und einer Viskosität im Bereich von 100 bis 5.000 mPa·s dem Herstellungsprozeß zuzusetzen. Diese bevorzugt eingesetzte Stärke kann dem Aufbereitungsprozeß von keramischen Schlickern ohne Verdünnung zugesetzt werden. Durch ihre spezielle Modifikation, z.B. über Sulfamate, sonstige Sulfonsäureester oder schwefelfreie Organiken, bildet sie bei der Zersetzung unter Sauerstoffausschluß ein sehr gleichmäßig verteiltes, räumlich vernetztes Kohlenstoffgerüst aus, das dem Bauteil eine genügende Festigkeit für die mechanische Bearbeitung verleiht. Ein weiterer Vorteil gegenüber den üblicherweise eingesetzten Bindemitteln wie Pech, Teer oder Harz ist die für die vollständige Zersetzung der Stärke notwendige Pyrolysetemperatur im Bereich von 200 bis 700°C, die durch die DTA-TG-Kurve veranschaulicht wird. Peche, Teere und Harze müssen, um eine vollständige Zersetzung zu erreichen, je nach Modifikation bis auf 900 °C bis 1100 °C erhitzt werden. Bei dem erfindungsgemäßen Einsatz von Stärke läßt sich hingegen ein beträchtliches Energieeinsparungspotential realisieren.

Ein weiterer Vorteil des erfindungsgemäß bevorzugten Verfahrens ist darin zu sehen, daß das eingesetzte Stärkeprodukt beliebig mit Wasser mischbar ist, und aufgrund seiner flüssigen Konsistenz eine sehr gute Benetzung der eingesetzten Rohstoffe Siliciumcarbid und Kohlenstoff gewährleistet. Will man eine gleich gute Benetzung mit Harzen oder Pech erreichen, so muß man auf organische Lösungsmittel wie Aceton, Isopropanol, Toluol etc. zurückgreifen, was mit Rücksicht auf die Umweltbelastung und die Arbeitsbedingungen im Betrieb vermieden werden soll.

Aufgrund der flüssigen Form der Stärke wird auf den miteinander zu vernetzenden Siliciumcarbid- und Kohlenstoffpartikeln eine sehr dünne Schicht aufgebracht, welche nach der thermischen Zersetzung eine ebenso dünne Kohlenstoffschicht hinterläßt. Diese genügt, um dem Bauteil eine ausreichende Festigkeit zu geben, damit eine mechanische Bearbeitung möglich ist. Dies bedeutet, daß im Vergleich zu Bindemittel-Lösungen vergleichbarer Konzentration, wie zum Beispiel Phenolharzen, in den Vergleichsbeispielen, deutlich weniger pyrolytisch erzeugter Kohlenstoff notwendig ist, um die gleiche mechanische Festigkeit zu erreichen. Um einen ähnlichen Effekt zu erreichen, wurden flüssige Phenol-Resol-Harze getestet, die jedoch den Nachteil haben, daß sie zum einen bis zu 20 Gew.-% freies Phenol enthalten und zum anderen nur begrenzt mit Wasser misch- oder verdünnbar sind, was die Gefahr der Ausflockung heraufbeschwört. Pech und Teer eignen sich nur zur Aufbereitung von Massen durch Misch- und Knetvorgänge, jedoch nicht zur Aufbereitung von Schlickern zur Sprühtrocknung oder zum Schlickergießen.

Bauteile aus siliciuminfiltriertem Siliciumcarbid werden gewöhnlich aus einer Mischung umfassend Siliciumcarbidpulver aus einer oder mehreren gemischten Kornfraktionen, welche die Gerüstsubstanz bilden, Kohlenstoff in Form von Graphit, Koks, Ruß etc., der bei der Umsetzung im Infiltrationsprozeß zu sekundärem Siliciumcarbid reagiert, dabei die eingesetzten Primärteilchen aus Siliziumcarbid verbindet und so zur Eigenschaftsverbesserung des Werkstoffes beiträgt, und in allen Fällen, in denen die Bauteile vor dem Infiltrationsprozeß noch mechanisch bearbeitet werden sollen, ein thermisch zersetzbares, bei der Zersetzung Kohlenstoff abspaltendes Bindemittel hergestellt. Die genannten Mischungskomponenten werden in Wasser gelöst bzw. suspendiert und der daraus entstandene Schlicker zum Beispiel mittels Sprühtrocknung in ein preß- oder ziehfähiges Granulat überführt. Eine alternative Verarbeitung des Schlickers z.B. durch Schlickergießen, Druckgießen, Foliengießen und Extrudieren ist durch Anpassung des Wassergehaltes des Schlickers und bei Bedarf Zugabe von dem Keramikingenieur bekannten Zusätzen wie Plastifizierungsmitteln oder Weichmachern auf die für das jeweilige Verfahren günstige Menge jederzeit möglich. Aus dem so gewonnenen Granulat wird mittels Matrizenpressen oder isostatischem Pressen ein Halbzeug gefertigt. Anschließend erfolgt eine Temperaturbehandlung unter Sauerstoffausschluß, bei der die eingesetzten Bindemittel zersetzt und in Kohlenstoff umgewandelt werden. Als Spaltprodukte bei der thermischen Zersetzung werden im wesentlichen nur CO₂ und H₂O gemessen. Viele mögliche Spaltprodukte liegen unterhalb der Nachweisgrenze. Hierbei verbindet der aus dem Bindemittel abgeschiedene Kohlenstoff die Siliciumcarbid- und Kohlenstoffpartikel miteinander, was zu einer Steigerung der Kokfestigkeit führt. Daran anschließend kann das Halbzeug beispielsweise mit Hilfe von spanabhebenden Verfahren mechanisch bearbeitet werden. Nach der mechanischen Bearbeitung werden die Bauteile im Infiltrationsprozeß mit Silicium infiltriert, wobei sich sowohl der primär eingesetzte Kohlenstoff wie auch der pyrolytisch aus dem Bindemittel gewonnene Kohlenstoff in sekundäres Siliciumcarbid umwandeln.

Die Vorteile der Erfindung sind im wesentlichen darin zu sehen, daß auf wäßriger Basis gearbeitet werden kann und die bei der Pyrolyse entstehenden Spaltprodukte umweltverträglich sind.

Es wurde entgegen der gängigen Lehrmeinung, daß ein Bindemittel mit sehr hohem Kohlenstoffrückstand vorteilhaft einzusetzen sei, überraschend gefunden, daß ein Bindemittel mit wesentlich geringerem Kohlenstoffrückstand bei gleicher Konzentration durch Verkoken zu gleichen Festigkeitsniveaus führt.

Die Erfindung soll nachfolgend durch Ausführungsbeispiele noch anschaulicher erläutert werden, ohne aber auf die konkreten Ausführungsformen beschränkt zu sein. Das im Rahmen der Beispiele und Vergleichsbeispiele gemessene Merkmal der Kokfestigkeit wurde durch eine Scheiteldruckfestigkeitsbestimmung an ringförmigen Prüfkörpern mit einem Außendurchmesser von 80 mm, einem Innendurchmesser von 40 mm und einer Höhe von 30 mm ermittelt.

### Beispiel 1

59,6 Gew.-% eines Siliciumcarbidpulvers mit einer mittleren Korngröße von 45 µm, 11,6 Gew.-% eines Siliciumcarbidpulvers mit einer mittleren Korngröße von 13 µm und 9,6 Gew.-% eines Siliciumcarbidpulvers mit einer mittleren Korngröße von 3 µm werden zusammen mit 9,6 Gew.-% Ruß und 9,6 Gew.-% einer wäßrigen Stärkelösung mit einem Feststoffgehalt von 70 Gew.-% einer Sulfamat-modifizierten Stärke, welche einen Verkokungsrückstand von 20 % aufweist, unter Zuhilfenahme eines geeigneten Verflüssigers in Wasser vollständig und ohne gelartige Rückstände dispergiert. Geeignete Verflüssiger sind beispielsweise Ligninderivate und ähnliche Mittel. Mittels Sprühtrocknung wird daraus ein preßfähiges Granulat erzeugt. Durch Trockenpressen werden daraus ringförmige Preßlinge folgender Geometrie: Außendurchmesser 80 x Innendurchmesser 40 x Höhe 30 mm hergestellt, welche eine Preßdichte von 2,17 g/cm³ aufweisen. Nach dem Pyrolyseprozeß bei einer Temperatur von 600 °C betrug die Dichte des verkokten Preßlings 2,11 g/cm³ und seine Kokfestigkeit 7,0 MPa. Die Preßlinge wurden anschließend mechanisch auf eine Geometrie von 75x45x10 mm bearbeitet, wobei aus jedem Preßling zwei Bauteile hergestellt wurden. Diese wurden im Vakuum mit Silicium infiltriert und allseitig geschliffen. Die Dichte der fertigen Bauteile betrug 3,08 g/cm³. Mittels Scheiteldruckprüfverfahren wurde eine Festigkeit der silizierten Bauteile von 418 MPa ermittelt. Die Anschliffe zeigten keine Poren und keine zusilizierten Poren.

### Vergleichsbeispiel 1

62,3 Gew.-% eines Siliciumcarbidpulvers mit einer mittleren Korngröße von 45 µm, 11,8 Gew.-% eines Siliciumcarbidpulvers mit einer mittleren Korngröße von 13 µm und 9,9 Gew.-% eines Siliciumcarbidpulvers mit einer mittleren Korngröße von 3 µm werden zusammen mit 9,0 Gew.-% Ruß und 7,0 Gew.-% Phenolharzpulver, welches einen Verkokungsrückstand von ca. 50 % aufweist, unter Zuhilfenahme eines geigneten Verflüssigers in Wasser dispergiert. Mittels Sprühtrocknung wird daraus ein preßfähiges Granulat erzeugt. Durch Trockenpressen werden daraus Preßlinge einer Geometrie 80x40x30 mm hergestellt, welche eine Preßdichte von 2,16 g/cm³ aufweisen. Nach dem Pyrolyseprozeß bei einer Temperatur von 950 °C betrug die Dichte des verkokten Preßlings 2,08 g/cm³ und seine Kokfestigkeit 6,4 MPa. Die Preßlinge wurden anschließend mechanisch auf eine Geometrie von 75x45x10 mm bearbeitet, wobei aus jedem Preßling zwei Bauteile hergestellt wurden. Diese wurden im Vakuum mit Silicium infiltriert und allseitig geschliffen. Die Dichte der Bauteile betrug 3,08 g/cm³. Mittels Scheiteldruckprüfverfahren wurde eine Festigkeit der silizierten Bauteile von 272 MPa ermittelt. Die Anschliffe wiesen einzelne Poren und zusilizierte Poren auf.

### Vergleichsbeispiel 2

62,8 Gew.-% eines Siliciumcarbidpulvers mit einer mittleren Korngröße von 13 µm, 15,3 Gew.-% eines Siliciumcarbidpulvers mit einer mittleren Korngröße von 3 µm werden zusammen mit 12,0 Gew.-% Ruß und 10,0 Gew.-% Phenolharzpulver, welches einen Verkokungsrückstand von circa 50 % aufweist, unter Zuhilfenahme eines geeigneten Verflüssigers in Wasser dispergiert. Mittels Sprühtrocknung wird daraus ein preßfähiges Granulat erzeugt. Durch Trockenpressen werden daraus ringförmige Preßlinge einer Geometrie 80x40x30 mm hergestellt, welche eine Preßdichte von 2,05 g/cm³ aufweisen. Nach dem Pyrolyseprozeß bei einer Temperatur von 950 °C betrug die Dichte des verkokten Preßlings 1,92 g/cm³ und seine Kokfestigkeit 6,3 MPa. Die Preßlinge wurden anschließend mechanisch auf eine Geometrie von 75x45x10 mm bearbeitet, wobei aus jedem Preßling zwei Bauteile hergestellt wurden. Diese wurden im Vakuum mit Silicium infiltriert und allseitig geschliffen. Die Dichte der Bauteile betrug 3,07 g/cm³. Mittels Scheiteldruckprüfverfahren wurde eine Festigkeit der silizierten Bauteile von 342 MPa ermittelt. Die Anschliffe wiesen einzelne Poren und zusilizierte Poren auf.

### Beispiel 2

63,0 Gew.-% eines Siliciumcarbidpulvers mit einer mittleren Korngröße von 13 µm und 15,8 Gew.-% eines Siliciumcarbidpulvers mit einer mittleren Korngröße von 3 µm werden zusammen mit 12,0 Gew.-% Ruß und 10,0 Gew.-% einer wäßrigen Stärkelösung mit einem Feststoffgehalt von ca. 70 Gew.-% einer über schwefelfreie Organiken modifizierten Stärke, welche einen Verkokungsrückstand von ca. 20 % aufweist, unter Zuhilfenahme eines geigneten Verflüssigers in Wasser vollständig und rückstandsfrei dispergiert. Mittels Sprühtrocknung wird daraus ein preßfähiges Granulat erzeugt. Durch Trockenpressen werden daraus Preßlinge einer Geometrie 80x40x30 mm hergestellt, welche eine Preßdichte von 2,01 g/cm³ aufweisen. Nach dem Pyrolyseprozeß bei 600 °C betrug die Dichte des verkokten Preßlings 1,96 g/cm³ und seine Kokfestigkeit 6,2 MPa. Die Preßlinge wurden anschließend mechanisch bearbeitet und auf eine Geometrie von 75x45x10 mm gebracht, wobei aus jedem Preßling zwei Bauteile hergestellt wurden. Diese wurden im Vakuum mit Silicium infiltriert und allseitig geschliffen. Die Dichte der Bauteile betrug 3,07 g/cm³. Mittels Scheiteldruckprüfverfahren wurde eine Festigkeit der silizierten Bauteile von 355 MPa ermittelt. Das Gefüge erwies sich in Anschliffen als frei von Poren und zusilizierten Poren.

### Beispiel 3

68,2 Gew.-% eines Siliciumcarbidpulvers mit einer mittleren Korngröße von 3 µm werden zusammen mit 22,7 Gew.-% Ruß und 9,1 Gew.-% einer wäßrigen Stärkelösung mit einem Feststoffgehalt von ca. 70 Gew.-% einer Sulfamat-modifizierten Stärke, welche einen Verkokungsrückstand von ca. 20 % aufweist, unter Zuhilfenahme eines geeigneten Verflüssigers in Wasser vollständig und rückstandsfrei dispergiert. Mittels Sprühtrocknung wird daraus ein preßfähiges Granulat erzeugt. Durch Trockenpressen werden daraus ringförmige Preßlinge mit einer Geometrie von 80x40x30 mm hergestellt, welche eine Preßdichte von 1,70 g/cm³ aufweisen. Nach dem Pyrolyseprozeß bei 600 °C betrug die Dichte des verkokten Preßlings 1,65 g/cm³ und seine Kokfestigkeit 7,1 MPa. Die Preßlinge wurden anschließend mechanisch bearbeitet und dabei auf eine Geometrie von 75x45x10 mm gebracht, wobei aus jedem Preßling zwei Bauteile hergestellt wurden. Diese wurden im Vakuum mit Silicium infiltriert und allseitig geschliffen. Die Dichte der Bauteile betrug 3,10 g/cm³. Mittels 4-Punkt-Biegeprüfung wurde an Prüfstäbchen der Geometrie 3x4x50 mm eine Festigkeit von 421 MPa ermittelt. Es gelang unter Verwendung der modifizierten Stärke erstmals, bei dem Feinstkornwerkstoff den hohen Anteil an großen siliziumgefüllten Poren gänzlich zu vermeiden und auch dadurch eine für SiSiC-Werkstoffe überraschend hohe Festigkeit zu erzielen. Das Gefüge zeigte sich auch frei von Poren.

### Vergleichsbeispiel 3

70,0 Gew.-% eines Siliciumcarbidpulvers mit einer mittleren Korngröße von 3 µm werden zusammen mit 19,0 Gew.-% Ruß und 11,0 Gew.-% Phenolharzpulver, welches einen Verkokungsrückstand von ca. 50 % aufweist, unter Zuhilfenahme eines geeigneten Verflüssigers in Wasser dispergiert. Mittels Sprühtrocknung wird daraus ein preßfähiges Granulat erzeugt. Durch Trockenpressen werden daraus ringförmige Preßlinge mit einer Geometrie von 80x40x30 mm hergestellt, welche eine Preßdichte von 1,84 g/cm³ aufweisen. Nach dem Pyrolyseprozeß bei 950 °C betrug die Dichte des verkokten Preßlings 1,77 g/cm³ und seine Kokfestigkeit 6,5 MPa. Die Preßlinge wurden anschließend mechanisch bearbeitet und dabei auf eine Geometrie von 75x45x10 mm gebracht, wobei aus jedem Preßling zwei Bauteile hergestellt wurden. Diese wurden im Vakuum mit Silicium infiltriert und allseitig geschliffen. Die Dichte der Bauteile betrug 3,08 g/cm³. Mittels 4-Punkt-Biegeprüfung wurde an Prüfstäbchen der Geometrie 3x4x50 mm eine Festigkeit von 357 MPa ermittelt. Im Gefüge wurden einzelne Poren und eine Vielzahl von zusilizierten Poren ermittelt.

Bei allen Beispielen wurden nach dem Verkokungsschritt Gasanalysen der Ofenatmosphäre erstellt, die folgende Resultate zeigten:

| Gehalt an: | Phenolen | Formaldehyd | Kresol |
|---|---|---|---|
| | jeweils in [mg/m³] | | |
| Beispiele 1-3: | 0,07 - 0,14 | 0,04 - 0,15 | ---- |
| Vergleichsbeispiele 1-3: | 1,7 - 4,8 | 0,4 - 1,6 | 0,1 bis 0,6 |

## Patentansprüche

1. Verfahren zur Herstellung von Bauteilen aus Siliziumcarbid unter Zusatz von kohlenstoffhaltigen Bindemitteln und gegebenenfalls von Kohlenstoff, wobei der Kohlenstoff mindestens teilweise durch Pyrolyse der Bindemittel im grünen Bauteil gewonnen wird, dadurch gekennzeichnet, daß als Bindemittel eine wässerige Dispersion oder Lösung aus in kaltem oder in heiβem Wasser vollständig dispergierte und/oder vollständig gelöste modifizierte Stärke mit einer Viskosität im Bereich von 100 bis 5.000 mPa·s verwendet wird und daß dieses Bindemittel bei Temperaturen ≤ 700°C vollständig thermisch zersetzt wird.

2. Verfahren nach Anspruch 1, dadurch gekennzeichnet, daß der Kohlenstoffrückstand nach Pyrolyse des Bindemittels höchstens 35 Gew.-%, vorzugsweise höchstens 25 Gew.-%, beträgt.

3. Verfahren nach Anspruch 1 oder 2, dadurch gekennzeichnet, daß die Stärke als wäßrige Lösung mit bis zu 75 % Feststoffanteil dem Herstellungsprozeß zugesetzt wird.

4. Verfahren nach Anspruch 3, dadurch gekennzeichnet, daß das Bindemittel bei Temperaturen ≤ 650 °C vollständig thermisch zersetzt wird.

5. Verfahren nach einem der Ansprüche 1 bis 4, dadurch gekennzeichnet, daß die Stärke in einer Menge von 3 bis 20 Gew.-%, bezogen auf das Gesamtgewicht des Feststoffgehaltes, zugesetzt wird.

6. Verfahren nach Anspruch 5, dadurch gekennzeichnet, daß die Stärke in einer Menge von 6 bis 10 Gew.-%, bezogen auf das Gesamtgewicht des Feststoffgehaltes, zugesetzt wird.

7. Verfahren nach einem der Ansprüche 1 bis 6, dadurch gekennzeichnet, daß kalt- und/oder heißwasserlösliche, wasserdispergierbare und/oder wassergelöste Stärke auf Basis Kartoffel-, Wachsmais- und Weizenstärke, bevorzugt über Sulfamate, sonstige Sulfonsäureester oder schwefelfreie Organiken modifizierte Wachsmaisstärke, eingesetzt wird.

8. Verfahren nach einem der Ansprüche 1 bis 7, dadurch gekennzeichnet, daß die wäßrige Mischung bzw. Suspension zu Granulat verarbeitet wird.

9. Verfahren nach einem der Ansprüche 1 bis 8, dadurch Gekennzeichnet, daß die Formgebung durch Schlickergießen, Foliengießen, Druckgießen, Extrudieren oder Spritzgießen, bevorzugt aber durch axiales oder isostatisches Pressen erfolgt.

10. Verfahren nach einem der Ansprüche 1 bis 9, dadurch gekennzeichnet, daß Bauteile aus siliciuminfiltriertem SiC (SiSiC), silicidhaltigem SiC, kohlenstoffreichem SiSiC (CSiSiC) oder gesintertem SiC (SSiC) hergestellt werden und daß der Werkstoff des Bauteils ein Gefüge aufweist, das frei von Poren oder siliciumgefüllten Poren ist.

## Claims

1. Method for producing components from silicon carbide with addition of carbon-containing binding agents and possibly carbon, the carbon being obtained at least partially by pyrolysis of the binding agents in the green component, characterised in that there is used as a binding agent an aqueous dispersion or solution of modified starch fully dispersed and/or fully dissolved in cold water or in hot water and having a viscosity in the range from 100 to 5,000 mPa·s, and in that this binding agent is fully decomposed by heat at temperatures ≤ 700°C.

2. Method according to claim 1, characterised in that the carbon residue after pyrolysis of the binding agent amounts to at most 35% by weight, preferably at most 25% by weight.

3. Method according to claim 1 or 2, characterised in that the starch is added to the manufacturing process as an aqueous solution with up to 75% solids content.

4. Method according to claim 3, characterised in that the binding agent is fully decomposed by heat at temperatures ≤ 650°C.

5. Method according to one of claims 1 to 4, characterised in that the starch is added in an amount of 3 to 20% by weight with respect to the total weight of the solids content.

6. Method according to claim 5, characterised in that the starch is added in an amount of 6 to 10% by weight with respect to the total weight of the solids content.

7. Method according to one of claims 1 to 6, characterised in that starch which is soluble in cold and/or hot water and is dispersable in water and/or dissolved in water and is based on potato starch, waxy maize starch and wheat starch, preferably waxy maize starch modified by way of sulphamates, other sulphonic acid esters or sulphur-free organic substances, is used.

8. Method according to one of claims 1 to 7, characterised in that the aqueous mixture or suspension is processed to form granules.

9. Method according to one of claims 1 to 8, characterised in that the shaping takes place by slip casting, film casting, die casting, extrusion or injection moulding, preferably, however, by axial or isostatic pressing.

10. Method according to one of claims 1 to 9, characterised in that components are produced from silicon-infiltrated SiC (SiSiC), silicide-containing SiC, high-carbon SiSiC (CSiSiC) or sintered SiC (SSiC), and in that the material of the component has a structure which is free of pores or silicon-filled pores.

## Revendications

1. Procédé de fabrication d'éléments de construction en carbure de silicium avec addition de liants contenant du carbone et éventuellement de carbone, le carbone étant produit au moins en partie par pyrolyse des liants dans l'élément de construction vert, lequel procédé est caractérisé par le fait que l'on utilise, comme liant, une dispersion ou solution aqueuse préparée à partir d'amidon modifié complètement dispersé et/ou complètement dissous dans de l'eau froide ou chaude, ayant une viscosité comprise dans l'intervalle allant de 100 à 5 000 mPa.s, et par le fait que ce liant subit une dégradation thermique complète à une température inférieure ou égale à 700 °C.

2. Procédé selon la revendication 1, caractérisé par le fait que le résidu carboné après pyrolyse du liant est au plus égal à 35 % en poids, de préférence au plus égal à 25 % en poids.

3. Procédé selon la revendication 1 ou 2, caractérisé par le fait que l'on introduit l'amidon au procédé de fabrication sous forme d'une solution aqueuse contenant jusqu'à 75 % de matières solides.

4. Procédé selon la revendication 3, caractérisé par le fait que le liant subit une dégradation thermique complète à des températures inférieures ou égales à 650 °C.

5. Procédé selon l'une des revendications 1 à 4, caractérisé par le fait que l'on ajoute l'amidon à raison de 3 à 20% en poids rapporté au poids total de la fraction de matières solides.

6. Procédé selon la revendication 5, caractérisé par le fait que l'on ajoute l'amidon à raison de 6 à 10 % en poids rapporté au poids total de la fraction de matières solides.

7. Procédé selon l'une des revendications 1 à 6, caractérisé par le fait que l'on utilise de l'amidon de pomme de terre, de maïs (à base d'amylopectine) ou de blé, soluble, dispersible ou dissoute dans de l'eau chaude et/ou froide, de préférence de l'amidon de maïs constitué d'amylopectine (*Wachsmaisstärke*) modifié par des groupes sulfamate, des groupes ester d'acide sulfonique ou des groupes organiques exempts de soufre.

8. Procédé selon l'une des revendications 1 à 7, caractérisé par le fait que le mélange ou la suspension est converti(e) en granulés.

9. Procédé selon l'une des revendications 1 à 8, caractérisé en ce que la mise en forme se fait par coulée de barbotine, par coulée de feuilles, par coulée sous pression, par extrusion ou par moulage par injection, mais de préférence par moulage axial ou isostatique.

10. Procédé selon l'une des revendications 1 à 9, caractérisé par le fait que l'on fabrique des éléments de construction en SiC à infiltrations de silicium (SiSiC), en SiC contenant des siliciures, en SiSiC riche en carbone (CSiSiC) ou en SiC fritté (SSiC) et par le fait que le matériau de l'élément a une structure exempte de pores ou une structure avec des pores remplis de silicium.
